# EUROPÄISCHE PATENTSCHRIFT

(11) **EP 1 763 452 B1**
(45) Veröffentlichungstag und Bekanntmachung des Hinweises auf die Patenterteilung: **11.03.2009**
(21) Anmeldenummer: 05759584.5
(22) Anmeldetag: 27.06.2005
(51) Int. Cl.: B60N 2/16, B60N 2/01

(54) **KRAFTFAHRZEUG MIT MINDESTENS EINER SITZREIHE**
MOTOR VEHICLE COMPRISING AT LEAST ONE ROW OF SEATS
VEHICULE COMPORTANT AU MOINS UNE RANGEE D'ASSISE

(30) Priorität: 03.07.2004 DE 102004032244
(43) Veröffentlichungstag der Anmeldung: 21.03.2007
(73) Patentinhaber: Bayerische Motoren Werke Aktiengesellschaft, 80809 München (DE)
(72) Erfinder: SCHWINGENSCHLOEGEL, Stefan, 81543 Muenchen (DE); BURGHARD, Kai, 80807 Muenchen (DE); GOERG, Christian, 85247 Schwabhausen (DE); VIRSIK, Karol, 81541 Muenchen (DE); REITMEIR, Maximilian, 81549 Muenchen (DE); POWELEIT, Axel-Artur, 80469 Muenchen (DE); NEDVED, Rudolf, Dirk, 85774 Unterföhring (DE)
(74) Vertreter: Günther, Hans Peter
(86) Internationale Anmeldenummer: PCT/EP2005/006902
(87) Internationale Veröffentlichungsnummer: WO 2006/002851

(56) Entgegenhaltungen:
- DE-A1- 10 212 550
- FR-A- 1 519 843
- US-A- 4 932 709
- US-A- 5 611 589
- US-A- 6 129 404

## Beschreibung

Die Erfindung betrifft ein Kraftfahrzeug mit mindestens einer Sitzreihe, bestehend aus einer durchgehenden Sitzbank und einer zweigeteilten Rückenlehne.

Raumfunktionale Fahrzeuge, wie Minivans, SUVs oder MPVs haben häufig ein variables Sitzkonzept und weisen eine dritte Sitzreihe mit zwei Sitzplätzen auf. Diese bietet in der Regel für zwei Personen nur ein eingeschränktes Platzangebot. Meist können nur Kinder o. dgl. dort bequem sitzen. Zudem ist das Raumgefühl in der dritten Sitzreihe sehr eingeengt, da die zweite Sitzreihe wie eine Wand vor den Personen in der dritten Sitzreihe wirkt.

Aus der US 5,611,589 ist bereits ein Kraftfahrzeug mit drei Sitzreihen bekannt, wobei die zweite und die dritte Sitzreihe jeweils einen linken und einen rechten Einzel-Sitz aufweist. Zwischen dem linken Einzel-Sitz und dem rechten Einzel-Sitz der zweiten Sitzreihe und dem linken Einzel-Sitz und dem rechten Einzel-Sitz der dritten Sitzreihe kann jeweils ein mittlerer Einzel-Sitz angeordnet werden. Der mittlere Einzel-Sitz ist zwischen der zweiten Sitzreihe und der dritten Sitzreihe in die jeweilige Sitzposition in der zweiten Sitzreihe oder in der dritten Sitzreihe verschiebbar und arretierbar.

Aus der DE 102 12 550 ist ein Kraftfahrzeug mit drei Sitzreihen bekannt, wobei die zweite Sitzreihe und die dritte Sitzreihe jeweils einen linken und einen rechten Einzel-Sitz aufweist. Die beiden Einzel-Sitze der dritten Sitzreihe sind unabhängig voneinander in ihrer Höhe verstellbar. Durch die Höhenverstellung der Einzel-Sitz der dritten Sitzreihe ist es möglich, dass die maximale Kopffreiheit einer auf einem höhenverstellbaren Einzel-Sitz befindlichen Person einstellbar ist.

Aus der US 4 932 709 ist ein Kraftfahrzeug bekannt, das alle Merkmale des Oberbegriffs des Anspruch 1 zeigt.

Es ist daher Aufgabe der vorliegenden Erfindung, ein Kraftfahrzeug zu schaffen, bei dem ein komfortabler Sitzplatz in der Mitte der dritten Sitzreihe geschaffen wird, der auch für große Personen ein ausreichendes Platzangebot zur Verfügung stellt.

Diese Aufgabe wird erfindungsgemäß durch die im Anspruch 1 angegebenen Merkmale gelöst.

Ein erfindungsgemäß ausgebildetes Kraftfahrzeug hat den Vorteil, dass durch das Absenken der Sitzbank im mittleren Bereich der Komfort für den mittleren Sitzplatz erhöht wird und gleichzeitig der H-Punkt durch das statische Einfedern abgesenkt werden kann. Dies erhöht die Kopffreiheit und schafft gleichzeitig mehr Platz für große Personen. Ein so ausgestattetes Kraftfahrzeug bietet sowohl zwei herkömmliche Sitzplätze mit eingeschränktem Platzangebot, aber auch einen komfortablen Sitzplatz in der Mitte der Sitzbank.

Durch die in den Unteransprüchen aufgeführten Merkmale sind vorteilhafte Weiterbildungen des im Anspruch 1 angegebenen Kraftfahrzeugs möglich.

Die erfindungsgemäße Ausgestaltung lässt sich besonders sinnvoll dann einsetzen, wenn es sich bei der Sitzreihe um eine dritte Sitzreihe mit eingeschränktem Platzangebot handelt. Ein Kraftfahrzeug mit dieser Sitzreihe kann sowohl als Siebensitzer genutzt werden, bietet aber auch fünf sehr komfortable Sitze. Der mittlere Sitzplatz in der dritten Sitzreihe bietet ein wesentlich besseres Raumangebot und auch mehr Komfort (u. a. Schulterfreiheit) als ein dritter Sitzplatz zwischen den äußeren Sitzplätzen in der zweiten Sitzreihe.

Die Möglichkeit des Absenkens des mittleren Bereichs der Sitzbank wird erfindungsgemäß dadurch erreicht, dass die Sitzbank in ihrem mittleren Bereich elastisch durchfedern kann.

Dieses Durchfedern ist erfindungsgemäß fixierbar ausgebildet, damit im Falle der Benutzung der Sitzbank durch zwei Personen diese nicht zur Mitte hin kippen.

Die Sitzbank kann vorteilhafterweise in Fahrzeuglängsrichtung verstellbar sein. Zusätzlich kann auch der Neigungswinkel der Rückenlehne einstellbar sein. Durch diese Maßnahmen lässt sich der Sitzkomfort erhöhen.

Um eine ausreichende Beinfreiheit für den mittleren Sitzplatz zu schaffen, kann nach einer vorteilhaften Weiterbildung der mittlere Sitz in der zweiten Sitzreihe nach vorne weggeklappt werden. Dies schafft ein verbessertes Raumgefühl, da die Person auf dem mittleren Sitzplatz in der dritten Sitzreihe keinen Sitz mehr vor sich hat und ein freier Blick nach vorne möglich ist.

Weitere Vorteile und Merkmale der vorliegenden Erfindung werden aus der nachfolgenden detaillierten Beschreibung eines Ausführungsbeispiels eines erfindungsgemäß ausgestatteten Kraftfahrzeuges im Zusammenhang mit den beigefügten Zeichnungen ersichtlich. Es zeigen:
- Fig. 1: ein Blick von oben in ein erfindungsgemäß ausgestattetes Kraftfahrzeug mit einer Sitzreihe zur Benutzung durch zwei Personen;
- Fig. 2: ein Blick von oben in das erfindungsgemäß ausgestattete Kraft- fahrzeug mit einer Sitzreihe, bei welcher der mittlere Bereich abgesenkt ist; und
- Fig. 3: ein Blick von oben in das erfindungsgemäß ausgestattete Kraft- fahrzeug mit einer Sitzreihe und einer im mittleren Bereich sit- zenden Person.

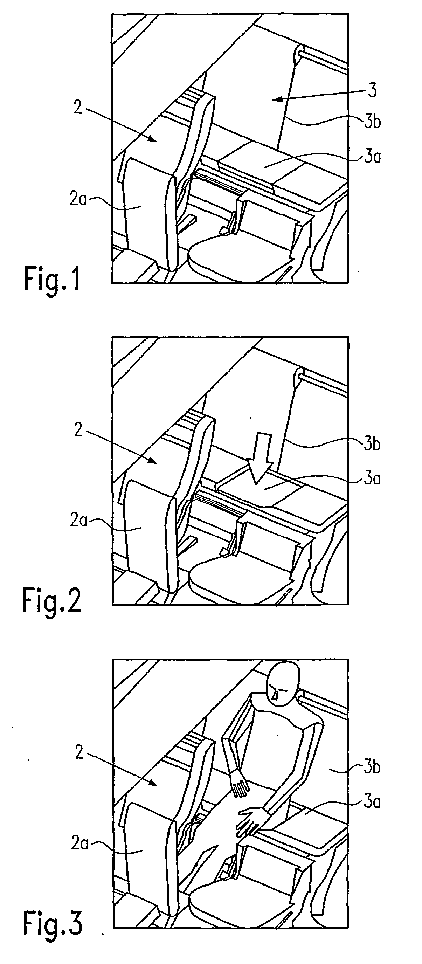

In den Figuren 1 bis 3 ist ein Blick von oben in ein Kraftfahrzeug zu sehen, bei dem eine zweite und eine dritte Sitzreihe 2, 3 dargestellt sind. Eine Rückenlehne der zweiten Sitzreihe 2 ist teilweise weg geschnitten, um den Blick auf die dritte Sitzreihe 3 freizugeben. Bei den Darstellungen nach den Figuren 1 bis 3 ist der mittlere Sitz 2a in der zweiten Sitzreihe 2 nach vorne geklappt, um für die in der Mitte der dritten Sitzreihe 3 sitzende Person mehr Beinfreiheit zu schaffen.

Die dritte Sitzreihe 3 weist eine durchgehende Sitzbank 3a und eine zweigeteilte Rückenlehne 3b auf. Die Sitzbank 3a kann in Fahrzeuglängsrichtung verstellbar und der Neigungswinkel der Rückenlehne 3b einstellbar sein.

Die Sitzbank 3a der dritten Sitzreihe 3 ist in ihrem mittleren Bereich absenkbar und zwar um vorzugsweise 30 - 40 mm. Dieser Zustand ist in Figur 2 dargestellt. Um dies zu erreichen, weist die Sitzbank 3a in ihrem mittleren Bereich eine Durchfederung auf, die fixierbar ist, um auch bei Benutzung durch zwei Personen einen ausreichenden Sitzkomfort zu gewährleisten.

Wie man insbesondere aus Figur 3 erkennt, hat die auf dem mittleren Sitzplatz sitzende Person auch eine ausreichende Beinfreiheit, was durch das Umklappen des mittleren Sitzes 2a der zweiten Sitzreihe 2 erreicht wird.

Durch die erfindungsgemäße Ausbildung der Sitzbank 3a können unterschiedliche Sitzhöhen eingenommen werden. Auch besteht die Möglichkeit der Einstellung von unterschiedlichen Sitzhärten.

Die vorhergehende Beschreibung des Ausführungsbeispieles gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Kraftfahrzeug mit mindestens einer Sitzreihe, bestehend aus einer durchgehenden Sitzbank und einer zweigeteilten Rückenlehne,
**dadurch gekennzeichnet, dass** die Sitzbank (3a) in ihrem mittleren Bereich absenkbar ist,
dass die Sitzbank (3a) in ihrem mittleren Bereich elastisch durchfedern kann,
und,
dass die Durchfederung fixierbar ausgebildet ist, damit im Falle der Benutzung der Sitzbank durch zwei Personen diese nicht zur Mitte hin kippen.

2. Kraftfahrzeug nach Anspruch 1,
**dadurch gekennzeichnet, dass** es sich bei der Sitzreihe um eine dritte Sitzreihe (3) mit eingeschränktem Platzangebot handelt.

3. Kraftfahrzeug nach einem der Ansprüche 1 bis 2,
**dadurch gekennzeichnet, dass** die Sitzbank (3a) in Fahrzeuglängsrichtung verstellbar ist.

4. Kraftfahrzeug nach einem der Ansprüche 1 bis 3,
**dadurch gekennzeichnet, dass** der Neigungswinkel der Rückenlehne (3b) einstellbar ist.

5. Kraftfahrzeug nach einem der Ansprüche 2 bis 4,
**dadurch gekennzeichnet, dass** sich vor der dritten Sitzreihe (3) eine zweite Sitzreihe (2) mit einem mittleren Sitz (2a) befindet und dass der mittlere Sitz (2a) nach vorne wegklappbar ist.

## Claims

1. A motor vehicle with at least one row of seats comprising a continuous bench and a two-part back rest, **characterised in that** the central region of the bench (3a) can be lowered, the central region of the bench (3a) is springy, and the spring deflection is adjustable so that if the bench is occupied by two persons it does not sag in the middle.

2. A motor vehicle according to claim 1, **characterised in that** the row of seats is a third row (3) with restricted space.

3. A motor vehicle according to claim 1 or claim 2, **characterised in that** the bench (3a) is adjustable in the longitudinal direction of the vehicle.

4. A vehicle according to any of claims 1 to 3, **characterised in that** the angle of inclination of the back rest (3b) is adjustable.

5. A vehicle according to any of claims 2 to 4, **characterised in that** a second row of seats (2) in front of the third row (3) comprises a middle seat (2a) which can be folded forwards.

## Revendications

1. Véhicule comportant au moins une rangée de sièges composée d'une banquette continue et d'un dossier divisé en deux,
**caractérisé en ce que**
la zone centrale de la banquette (3a) peut être abaissée,
la banquette (3a) peut se déformer élastiquement dans sa zone centrale, et
la suspension peut être bloquée de façon qu'en cas d'utilisation de la banquette par deux personnes, celle-ci ne bascule pas vers le milieu.

2. Véhicule selon la revendication 1,
**caractérisé en ce que**
la rangée de sièges est une troisième rangée de sièges (3) sur laquelle la place disponible est limitée.

3. Véhicule automobile selon l'une des revendications 1 et 2,
**caractérisé en ce que**
la banquette (3a) est réglable dans la direction longitudinale du véhicule.

4. Véhicule automobile selon l'une des revendications 1 à 3,
**caractérisé en ce que**
l'angle d'inclinaison du dossier (3b) est réglable.

5. Véhicule automobile selon l'une des revendications 2 à 4,
**caractérisé en ce qu'**
une seconde rangée de sièges (2) avec un siège central (2a) se trouve devant la troisième rangée de sièges (3), et
le siège central (2a) peut être dégagé par basculement vers l'avant.
